# EUROPEAN PATENT APPLICATION

(11) **EP 3 018 543 A1**
(43) Date of publication of application: **11.05.2016**
(21) Application number: 14191922.5
(22) Date of filing: 05.11.2014
(51) Int. Cl.: G05B 19/042

(54) **Sensor information transparency system and method**

(71) Applicant: FAZ Technology Limited, 12 Dublin (IE)
(72) Inventor: Lewis, Robin, Dublin, 12 (IE); Tomlinson, Neil, Dublin, 12 (IE); Ramirez-Padron, Ruben, Dublin, 12 (IE)
(74) Representative: Lucey, Michael

(57) **Abstract**

The present invention relates generally to the field of information transparency, and, more particularly, to a system and method for providing non-ambiguous sensor information transparency for deployed sensors within a highly geographically distributed, networked environment.

## Description

### BACKGROUND OF THE INVENTION

### 1. Field of the Invention

The present invention relates generally to the field of information transparency, and, more particularly, to a system and method for providing non-ambiguous sensor information transparency for deployed sensors within a highly geographically distributed, networked environment.

### 2. Description of the Related Art

Conventional technology exists that collects and stores sensor information, and makes such information available to appropriate individuals. Currently, the transparency of such information, where information transparency in the context of a deployed system refers to the unfettered ability to access key internal information sources, is seriously lacking. Information transparency is especially critical in process control industries where indemnity and regulatory concerns are a primary financial consideration (nuclear, oil and gas, pharmaceutical)

Description of the Related Art Section Disclaimer: To the extent that specific patents/publications/products/systems are discussed above in this Description of the Related Art Section or elsewhere in this Application, these discussions should not be taken as an admission that the discussed patents/publications/products are prior art for patent law purposes. For example, some or all of the discussed patents/publications/products/systems may not be sufficiently early in time, may not reflect subject matter developed early enough in time and/or may not be sufficiently enabling so as to amount to prior art for patent law purposes. To the extent that specific patents/publications/products/systems are discussed above in this Description of the Related Art Section and/or throughout the application, the descriptions/disclosures of which are all hereby incorporated by reference into this document in their respective entirety(ies).

### SUMMARY OF THE INVENTION

The present invention recognizes that there are potential problems and/or disadvantages with the conventional technology referenced above. In particular, the lack of an appropriate level of information transparency is due to, among other factors, inappropriate credentialing, disparate connectivity and semantic ambiguity. Various embodiments of the present invention may be advantageous in that they may solve or reduce one or more of the potential problems and/or disadvantages with conventional information transparency technology discussed herein.

Various embodiments of the present invention may exhibit one or more of the following objects, features and/or advantages:

It is therefore a principal object and advantage of the present invention to provide an information transparency system and method, as set out in the appended claims, that addresses the above-referenced concerns and allows for unfettered access to disparate data sources.

It is another object and advantage of the present invention to provide an information transparency system and method that can utilize the latest Internet technologies for large scale sensor data streaming.

It is further object and advantage of the present invention to provide an information transparency system and method that can ensure standard and extensible third party information consumer participation.

It is another object and advantage of the present invention to provide an information transparency system and method that can require only minimal system content knowledge to extract sensor information.

It is a further object and advantage of the present invention to provide an information transparency system and method that can provide access to sensor information for multiple sensor families and physical interconnects.

It is another object and advantage of the present invention to provide an information transparency system and method that can provide historical and real-time information access.

In accordance with the foregoing objects and advantages, an embodiment of the present invention is directed to a method for enabling deployed sensor information transparency in response to a consumer-based request via the Internet for specific sensor meta-data. The method can generally employ, but is not limited to, the steps of: collecting local sensor data; selecting at least one deployed sensor source/stream from a plurality of deployed sensors within a highly geographically distributed, networked environment; collating the selected sensor source(s)/stream(s) across multiple collection nodes; correlating and associating hypermedia/URL access of the selected sensor source(s)/stream(s), where the hypermedia/URL technology can provide non-ambiguous semantic translation; credential access to Internet accessible and attached information; and publishing the selected sensor source(s)/stream(s).

The method for enabling deployed sensor information transparency in response to a consumer-based request via the Internet for specific sensor meta-data is a novel approach for bridging the gap between deployed sensor data and Internet connected sensor information consumers. The non-trivial methods steps, as detailed herein and below, are part of an Internet provisioned information transparency assurance process.

In accordance with the foregoing objects and advantages, an embodiment of the present invention is also directed to a system and components thereof for enabling deployed sensor information transparency in response to a consumer-based request via the Internet for specific sensor meta-data. The system can include, but is not limited to, components, modules, and/or a non-transitory computer-readable storage mediums containing program code structured, located, connected and/or programmed to implement the methodology discussed herein.

In accordance with an embodiment of the present invention, it is contemplated that the system and method described herein can apply to any data source including sensor data.

The transmission/transfer of data, control signals and/or monitoring signals from various portions/components of embodiments of the system described herein can be via wireless communication/transmission over a network, which can be any suitable wired or wireless network capable of transmitting communication, including but not limited to a telephone network, Internet, Intranet, local area network, Ethernet, online communication, offline communications, wireless communications, satellite communications (e.g., as evident on cargo shipping) and/or similar communications means. The wireless transmission can be accomplished through any wireless protocol/technology, including, but not limited to, ZigBee standards-based protocol, Bluetooth technology, and/or Wi-Fi technology. Further, this data can be encrypted as needed based on the sensitivity of the data or the location the components of the system, for example. Components of the system can be located in the same room, in a different room in the same building, in a completely different building and location from one another. In the figures, such transmission/transfer of data, control signals and/or monitoring signals are typically shown by arrows.

### BRIEF DESCRIPTION OF THE DRAWINGS

The present invention will be more fully understood and appreciated by reading the following Detailed Description in conjunction with the accompanying drawings, in which:
Fig. 1 is a system architecture diagram showing certain functionality of the system and steps of a method in accordance with an embodiment of the present invention.
Fig. 2 is a flow diagram representation of an embodiment of the method according to the present invention.
Fig. 3 is a system architecture diagram in combination with flow diagram elements showing certain functionality of the system and steps of a method in accordance with an embodiment of the present invention.

### DETAILED DESCRIPTION

The present invention will be more fully understood and appreciated by reading the following Detailed Description in conjunction with the accompanying drawings, wherein like reference numerals refer to like components.

As detailed herein, a novel system and method for enabling deployed sensor information transparency in response to a consumer-based request via the Internet for specific sensor meta-data is provided. An embodiment of the present invention relates to sensor information (e.g., optical or electrical). This information can be obtained from any deployed sensor within a highly geographically distributed, networked environment.

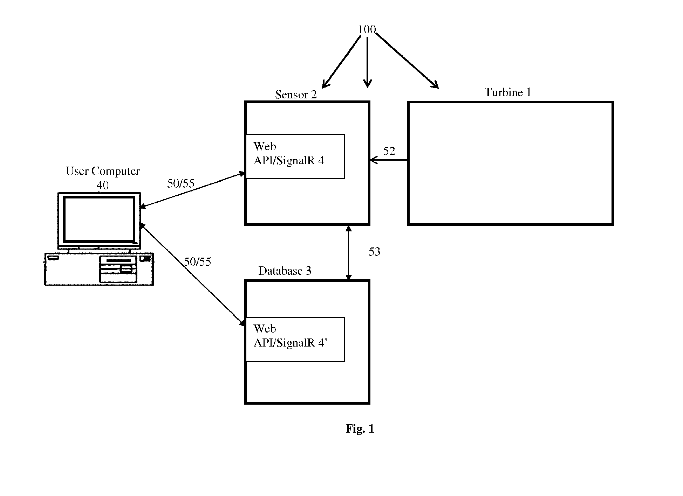

For example, a number of physical sensors 2 can be directly attached to geographically distributed turbines 1 (*see* Fig. 1 - showing a system architecture diagram 100 illustrating certain functionality of the system and steps of a method in accordance with an embodiment of the present invention). In this example, the physical sensors are intrinsically attached to the deployed physical environment upon which they are providing sensing information. Only one of the following: turbine 1, sensor 2, database 3, and a user computer 40 are shown for simplicity. However, the present invention is not limited to this number of these components. The sensors 2 can be used to measure and obtain a variety of data parameters/points 52 helpful to the user of the turbine 1. For example, the sensors 2 can produce a wide variety of environmental measurements including, but not limited to: temperature, strain, pressure, flow, vibration, Electro-magnetic-Interference (EMI), acoustics and gas chemical species composition. Specific to a turbine, temperature, vibration, strain and flow are perceived as important sensors and can be used to calculate operational efficiency and end of life estimates. The sensors 2 can maintain the resulting measurements themselves, or can store 53 the measurements in a memory or in attached (wired or wirelessly, local or non-local) databases 3. It is preferable that the data is stored and correlated to time of measurement/storage and be available in real time. "Correlated" in terms of time measurement refers primarily to ensuring consistent time tagging of all the distributed sensor data which can be minimally ensured via common network clock utilization for accuracies within several seconds. These sensors 2 and/or the databases 3 can be interrogated and/or queried (request/query 50; response 55) by a user computer 40 in order to obtain/harvest the resulting measurements obtained by the sensors 2. The request/query 50 and response 55 can be done over the Internet and through a Web API/SignalR (or other high speed Web technology) 4/4', which is associated with a specific URL (which is discussed in more detail below).

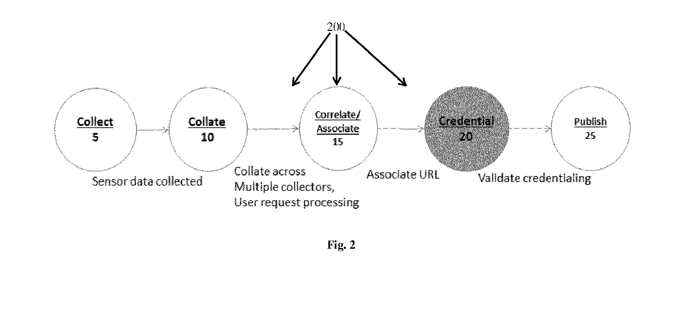

Turning to Fig. 2, a flow diagram representation 200 of an embodiment of the method according to the present invention, which can include, but is not limited to, the enumerated steps. These steps describe and/or illustrate the enablement of deployed sensor information transparency.

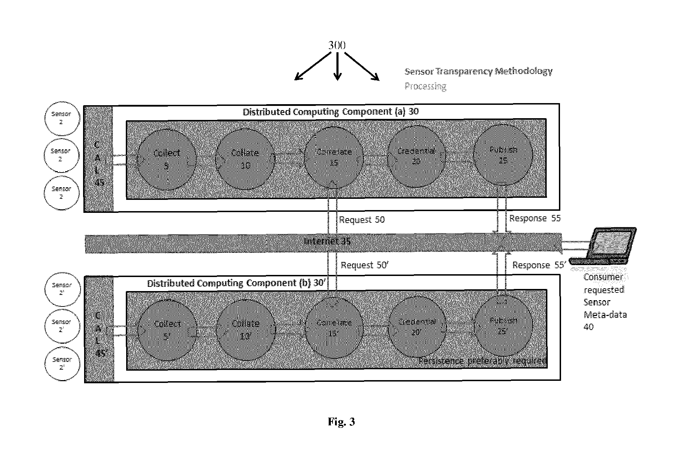

Beginning at step 5, sensor meta-data from disparate sensor sources 2/2' is collected via a collection abstraction layer (CAL) 45/45' (*see* Fig. 3). The CAL 45/45' can adapt to multiple sensor connectivity technologies including Open Systems Interconnection (OSI) and lower level serial communication technologies. This enables communicative connectivity for a wide range of electrical and optical sensor families. The CAL can inter-operate within a wide variety of prescriptive Host layer protocols in the OSI model, effectively abstracting away sensor connectivity details away from the Distributed Computing Component(s) Sensor Transparency method steps. The Collect component method operates primarily to persist the sensor meta-data after it acquired through the CAL. This collected source sensor meta-data can be persisted and stored in the local memory of the Distributed Computer Component 2 or in a local/remote database 3 (*see* Fig. 1). The Collect component method ensures appropriate buffering is employed to minimize any potential data loss from the CAL which is bringing in data from disparate sources before the sensor-meta-data is persisted. At step 10, sensor meta-data from selected sensor sources (2 or 2' - see Fig 3) across multiple physical sensor locations is collated At step 15, the selected sensor sources are correlated and associated with an addressable non-ambiguous URL assignment. This step can be deemed the "self-describing piece" - meaning that information can be pulled about the one or more selected sensor sources without any detailed knowledge of the system other than the Correlation Component Domain Name which resolves the IP address(s) of the available Distributed Computing Components. Users can request available sensor libraries via hypermedia/URL query, providing the requestor with the navigation hierarchy to obtain announced sensor meta-data sources without system context details. Step 15 results in bridging local meta-data access into web browser connectivity (hypermedia abstraction), does not require consumer application of deployed system context to access sensor data, provides real time and/or historical information access, and disparate information semantics are resolved via hypermedia/URL composition. At step 20, the credentialing method is applied to user/consumer information requests (processing a user's request), and a notification can be provided to appropriate persons regarding potential nefarious connectivity requests. The Credentialing method applies digital credentialing to user requests and requires basic User ID and password input to vet access. UIDs and passwords for approved requestors can be stored in the same database as the persisted sensor meta-data. These credentials are administered by the sensor meta-data owners and can be dynamically modified to allow or disallow unfettered access. At step 25, upon successful credentialing, the selected sensor source(s)/stream(s) are published. Publishing can take a variety of forms including: single measurement update and dynamic streaming. User requests for sensor meta-data is actively published upon successful credentialing. These steps are performed to acquire sensor meta-data from a physical location, and to distribute and make this data transparent and available virtually. From the requestors perspective the following typical sequence is required to interact with the information transparency methods: requestor opens up a web portal, requestor enters the domain name of the deployed sensing system (i.e. http://FAZ-GE-Dublin-Turbinel.com/Show_me-the available sensors.html), requestor provides required credentialing information, requestor selects sensors from available set, chooses single or dynamic update and real-time or historical output. The requested sensor data in now streamed to the requestor's portal.

Fig. 3 is a system architecture diagram 300 in combination with flow diagram elements (shown in Fig. 2) showing certain functionality of the system and steps of a method in accordance with an embodiment of the present invention. Deployed sensors 2 are shown associated with distributed computing component/module (a) 30 including CAL 45, and deployed sensors 2' are shown associated with distributed computing component/module (b) 30' including CAL 45'. The "distributed computing component(s)" do not have to be intrinsically co-located with physical optical sensors. They can be co-located physically with the Optical Interrogation Platform or with an electrical breakout box, but are more likely to be physically separate, residing in a regional data center. As shown, a consumer/user computer 40 can make a request 50/50' via the Internet 35 for information regarding sensors 2/2' through the distributed computing components/modules (a)/(b) 30/30', receive a response 55/55' including sensor 2/2' meta-data via the Internet 35, and the sensor related information is processed through the flow diagram elements (5/5', 10/10', 15/15', 20/20', 25/25').

A "module," as may be used herein, can include, among other things, the identification of specific functionality represented by specific computer software code of a software program that is recorded on a computer readable medium. A software program may contain code representing one or more modules, and the code representing a particular module can be represented by consecutive or non-consecutive lines of code. The computer-executable program instructions of an embodiment of the present invention can comprise any computer-programming language known in the art, including but not limited to C, Java, Python, Perl, ActionScript and JavaScript, among many others.

As will be appreciated by one skilled in the art, aspects of the present invention may be embodied/implemented as a computer system, method or computer program product. The computer program product can have a computer processor or neural network, for example, which carries out the instructions of a computer program. Accordingly, aspects of the present invention may take the form of an entirely hardware embodiment, an entirely software embodiment, and entirely firmware embodiment, or an embodiment combining software/firmware and hardware aspects that may all generally be referred to herein as a "circuit," "module," "system," or an "engine." Furthermore, aspects of the present invention may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction performance system, apparatus, or device.

The program code may perform entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flow diagrams/charts/block diagrams/system architecture diagrams in the Figures illustrate the architecture, functionality, and operation of possible implementations of systems, methods, and computer program products according to various embodiments of the present invention. In this regard, each block in the flowcharts/block diagrams may represent a module, segment, or portion of code, which comprises instructions for implementing the specified logical function(s). It should also be noted that, in some alternative implementations, the functions noted in the block may occur out of the order noted in the figures. For example, two blocks shown in succession may, in fact, be performed substantially concurrently, or the blocks may sometimes be performed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While several embodiments of the invention have been discussed, it will be appreciated by those skilled in the art that various modifications and variations of the present invention are possible. Such modifications do not depart from the spirit and scope of the present invention.

## Claims

1. A method for enabling deployed sensor information transparency comprising the steps of:
collecting at least a first data set data measured or obtained by a first sensor and a second data set measured or obtained by a second sensor;
storing the first data set and the second data set in a database;
correlating and associating the first sensor and first data set with a first URL assignment, and the second sensor and second sensor data set with a second URL assignment;
authenticating a user's credentials upon a user's request through the first URL assignment for access to the first data set or through the second URL assignment for access to the second data set; and
providing the user with virtual access to the first data set through the first URL assignment or to the second data set through the second URL assignment upon successful authentication of the user's credentials.

2. The method of claim 1, further comprising the step of collating the at least first sensor and said second sensor across at least a first collection node and a second collection node.

3. The method of claim 1, further comprising the step of correlating the at least first data to a first time the at least first data was collected.

4. The method of claim 3, further comprising the step of correlating the at least second data to a second time the at least second data was collected.

5. The method of claim 1, wherein the step of providing further comprises the step of publishing the first data set and the second data set, wherein said publishing comprises providing a user access to a single measurement update or dynamic streaming of the first data set or the second data set.

6. The method of claim 1, further comprising the step of persisting the first data set and the second data set in the database.

7. The method of claim 1, wherein said first sensor and said second sensor are disparate sensors.

8. The method of claim 1, wherein said first sensor and said second sensor are deployed in different geographic locations.

9. The method of claim 1, wherein the first sensor data and the second sensor data is data selected from the group consisting of temperature data, strain data, pressure data, flow data, vibration data, EMI data, acoustics data and gas chemical species composition data.

10. A non-transitory computer-readable storage medium containing program code comprising:
program code for collecting at least a first data set data measured or obtained by a first sensor and a second data set measured or obtained by a second sensor;
program code for storing the first data set and the second data set in a database;
program code for correlating and associating the first sensor and first data set with a first URL assignment, and the second sensor and second sensor data set with a second URL assignment;
program code for authenticating a user's credentials upon a user's request through the first URL assignment for access to the first data set or through the second URL assignment for access to the second data set; and
program code for providing the user with virtual access to the first data set through the first URL assignment or to the second data set through the second URL assignment upon successful authentication of the user's credentials.

11. The non-transitory computer readable storage medium of claim 10, further comprising program code for collating the at least first sensor and said second sensor across at least a first collection node and a second collection node.

12. The non-transitory computer readable storage medium of claim 10, further comprising program code for correlating the at least first data to a first time the at least first data was collected and/or
further comprising program code for correlating the at least second data to a second time the at least second data was collected.

13. The non-transitory computer readable storage medium of claim 10, further comprising program code for publishing the first data set and the second data set, wherein said program code for publishing comprises providing a user access to a single measurement update or dynamic streaming of the first data set or the second data set and/or
further comprising program code for persisting the first data set and the second data set in the database.

14. A system for enabling deployed sensor information transparency comprising:
a first distributed computing component associated with at least a first sensor comprising a first data set measured or obtained by said at least first sensor comprising;
a first collection module configured to collect the first data set from said at least first sensor via a first collection abstraction layer;
a first database configured to store the first data set and the second data set;
a first correlating module configured to correlate and associate the first sensor and first data set with a first URL assignment, and the second sensor and second sensor data set with a second URL assignment;
a first authenticating layer configured to authenticate a user's credentials upon a user's request through the first URL assignment for access to the first data set or through the second URL assignment for access to the second data set; and
a first publishing module configured to provide the user with virtual access to the first data set through the first URL assignment or to the second data set through the second URL assignment upon successful authentication of the user's credentials.

15. The system of claim 14, further comprising:
a second distributed computing component associated with at least a second sensor comprising a second data set measured or obtained by said at least second sensor comprising;
a second collection module configured to collect the second data set from said at least second sensor via a second collection abstraction layer;
a second database configured to store the second data set and the second data set;
a second correlating module configured to correlate and associate the second sensor and second data set with a second URL assignment, and the second sensor and second sensor data set with a second URL assignment;
a second authenticating layer configured to authenticate a user's credentials upon a user's request through the second URL assignment for access to the second data set or through the second URL assignment for access to the second data set; and
a second publishing module configured to provide the user with virtual access to the second data set through the second URL assignment or to the second data set through the second URL assignment upon successful authentication of the user's credentials.
